# EUROPÄISCHE PATENTSCHRIFT

(11) **EP 2 650 606 B1**
(45) Veröffentlichungstag und Bekanntmachung des Hinweises auf die Patenterteilung: **06.06.2018**
(21) Anmeldenummer: 13163094.9
(22) Anmeldetag: 10.04.2013
(51) Int. Cl.: F21V 8/00

(54) **LED-Leuchte**
LED-lamp
Lampe à DEL

(30) Priorität: 13.04.2012 DE 202012101352 U
(43) Veröffentlichungstag der Anmeldung: 16.10.2013
(73) Patentinhaber: Zumtobel Lighting GmbH, 6850 Dornbirn (AT)
(72) Erfinder: Ilic, Tanja, 6850 Dornbirn (AT); Kilga, Marcel, 6840 Götzis (AT)
(74) Vertreter: Thun, Clemens

(56) Entgegenhaltungen:
- EP-A1- 1 381 494
- US-A1- 2008 002 093
- US-A1- 2010 265 738
- US-A1- 2012 063 168

## Beschreibung

Die Erfindung betrifft eine Leuchte, insbesondere eine Hinweisleuchte mit LEDs (LED: lichtemittierende Diode), einer Lichtleiterplatte und einem Rahmenelement, das um die Lichtleiterplatte und um die LEDs herum angeordnet ist.

Eine solche Leuchte ist aus der DE 20 2006 014 352 U1 bekannt. Bei dieser Leuchte sind die LEDs auf einer länglichen Platine angeordnet, die seitlich neben der Lichtleiterplatte montiert ist, so dass das Licht der LEDs in die Lichtleiterplatte eingekoppelt wird. Das eingekoppelte Licht wird dann im Weiteren über eine Vorderfläche der Lichtleiterplatte abgegeben.

Der Rahmen muss dabei eine gewisse Mindestbreite aufweisen, wenn vermieden werden soll, dass bei Betrachtung der Vorderfläche der Lichtleiterplatte die Umgebungen der LEDs besonders hell erscheinen. Hierdurch sind die Gestaltungsmöglichkeiten der Leuchte limitiert. Zudem wird bei dieser Leuchte zur Montage die Platine mit den LEDs auf der Innenseite des Rahmens befestigt, wodurch der Montageaufwand vergleichsweise hoch ist.

Aus der US 2012/0063168 A1 ist eine Vorrichtung zur Abgabe von flächigem Licht bekannt, die eine, von einem Rahmenelement umfasste Lichtleiterplatte aufweist. An einer Schmalseite der Lichtleiterplatte, ebenfalls innerhalb des Rahmenelements, sind LEDs angeordnet, die ihr Licht in die Lichtleiterplatte einstrahlen. Die Lichtabgabe erfolgt über eine Flachseite der Lichtleiterplatte. Letztere ist randseitig von einem plattenartigen, Licht abschirmenden, weiteren Rahmenelement abgedeckt, wobei auch die LEDs von diesem weiteren Rahmenelement abgedeckt sind.

Weitere flächige Lichtabgabevorrichtungen sind aus den Schriften US 2008/0002093 A1 und US 2010/0265738 A1 bekannt.

Der Erfindung liegt die Aufgabe zugrunde, eine verbesserte Leuchte anzugeben, die insbesondere verbesserte Gestaltungsmöglichkeiten bietet. Außerdem soll die Leuchte montagefreundlicher sein.

Diese Aufgabe wird gemäß der Erfindung mit dem in dem unabhängigen Anspruch angegebenen Gegenstand gelöst. Besondere Ausführungsarten der Erfindung sind in den abhängigen Ansprüchen angegeben.

Gemäß der Erfindung ist eine Leuchte, insbesondere eine Hinweisleuchte, vorgesehen, die LEDs zur Erzeugung eines Lichts aufweist, sowie eine Lichtleiterplatte, mit einer, in erster Näherung planen Vorderfläche, einer Rückfläche und einer, die Vorderfläche mit der Rückfläche verbindenden, randseitigen Seitenfläche, wobei die LEDs derart längs der Seitenfläche angeordnet sind, dass das Licht in die Lichtleiterplatte eingekoppelt wird. Dabei ist die Leuchte derart gestaltet, dass das Licht im Weiteren zumindest teilweise über die Vorderfläche abgegeben wird. Weiterhin weist die Leuchte ein Rahmenelement auf, das um die Lichtleiterplatte und um die LEDs herum angeordnet ist. Außerdem weist die Leuchte ein Abdeckelement mit einem Abdeckstreifen auf, wobei die Leuchte derart gestaltet ist, dass, in einer Projektion normal zu der Vorderfläche betrachtet, der Abdeckstreifen die LEDs abdeckt und das Rahmenelement die LEDs nicht abdeckt.

Durch das Abdeckelement lässt sich erzielen, dass - bei gegebener Homogenität der Lichtabgabe über die Vorderfläche der Lichtleiterplatte - das Rahmenelement besonders schmal gestaltet werden kann. Hierdurch sind die Gestaltungsmöglichkeiten der Leuchte verbessert. Insbesondere im Fall einer Hinweisleuchte ist es in der Regel erwünscht, den Rahmen besonders schmal ausführen zu können.

Zudem eignet sich das Abdeckelement für eine mechanische Verbindung der LEDs mit der Lichtleiterplatte, so dass eine entsprechende Baueinheit gebildet werden kann, durch die eine erleichterte Montage der Leuchte ermöglicht ist.

Vorzugsweise besteht das Abdeckelement aus einem elastischen Material. Hierdurch ist die Montage erleichtert. Insbesondere kann das Abdeckelement hierzu aus einem Elastomer, vorzugsweise einem thermoplastischen Elastomer bestehen.

Vorzugsweise ist der Abdeckstreifen weiß gefärbt. Hierdurch lässt sich die Homogenität der Lichtabgabe über die Vorderfläche der Lichtleiterplatte weiter verbessern. Herstellungstechnisch vorteilhaft ist das gesamte Abdeckelement weiß gefärbt.

Vorteilhaft weist die Leuchte außerdem eine Leiterplatte auf, auf der die LEDs angeordnet sind, wobei das Abdeckelement ein Rastelement, insbesondere ein pilzkopf-förmiges Rastelement für eine formschlüssige Verbindung mit der Leiterplatte aufweist. Hierdurch lässt sich das Abdeckelement besonders montagefreundlich, insbesondere ohne Klebeverbindung mit der Leiterplatte verbinden. Eine besonders einfache Gestaltung ist dabei ermöglicht, wenn die Leiterplatte eine Bohrung aufweist, durch die hindurch sich das Rastelement erstreckt.

Erfindungsgemäß ist das Abdeckelement für eine formschlüssige Verbindung mit der Lichtleiterplatte gestaltet. Hierdurch lässt sich montagefreundlich eine Baueinheit bilden, die das Abdeckelement und die Lichtleiterplatte umfasst.

Vorzugsweise weist das Abdeckelement außerdem einen weiteren Abdeckstreifen auf und ist dabei derart gestaltet, dass der Abdeckstreifen und der weitere Abdeckstreifen zur formschlüssigen Verbindung mit der Lichtleiterplatte Letztere umgreifen. Hierdurch lässt sich das Abdeckelement besonders einfach mit dem Lichtleiterelement verbinden. Außerdem ist so das Abdeckelement - mit Bezug auf die Vorderfläche und die Rückfläche der Lichtleiterplatte - beidseitig entsprechend verwendbar.

Vorzugsweise weist das Abdeckelement weiterhin einen Verbindungssteg auf, der den Abdeckstreifen und den weiteren Abdeckstreifen miteinander verbindend angeordnet ist. Vorteilhaft ist dabei das Rastelement an dem Verbindungssteg angeordnet.

Weiterhin vorzugsweise weist dabei die Seitenfläche der Lichtleiterplatte eine Verbindungssteg-Ausnehmung auf, wobei der Verbindungssteg die Verbindungssteg-Ausnehmung durchsetzend angeordnet ist. Hierdurch ist eine erleichterte Montage ermöglicht.

Lichttechnisch vorteilhaft und montagefreundlich weist die Seitenfläche eine LED-Ausnehmung auf, wobei sich eine der LEDs in die LED-Ausnehmung hinein erstreckt.

Die Erfindung wird im Folgenden anhand eines Ausführungsbeispiels und mit Bezug auf die Zeichnungen näher erläutert. Es zeigen:
- Fig. 1: eine Skizze zu einem Ausführungsbeispiel einer erfindungsgemäßen Leuchte,
- Fig. 2: eine perspektivische Schnittdarstellung durch einen unteren Bereich der Leuchte,
- Fig. 3: eine entsprechende Querschnittdarstellung,
- Fig. 4: eine Prinzip-Skizze einer Sicht auf die Vorderfläche der Lichtleiterplatte,
- Fig. 5: eine perspektivische Skizze eines Endbereichs des Abdeckelements,
- Fig. 6: eine entsprechende Schnittdarstellung,
- Fig. 7: eine perspektivische Schnittdarstellung eines Eckbereichs der, aus Lichtleiterplatte, Leiterplatte mit LEDs und Abdeckelement bestehenden Baueinheit und
- Fig. 8: ein Detail aus Fig. 7 um ein pilzkopf-förmiges Rastelement des Abdeckelements.

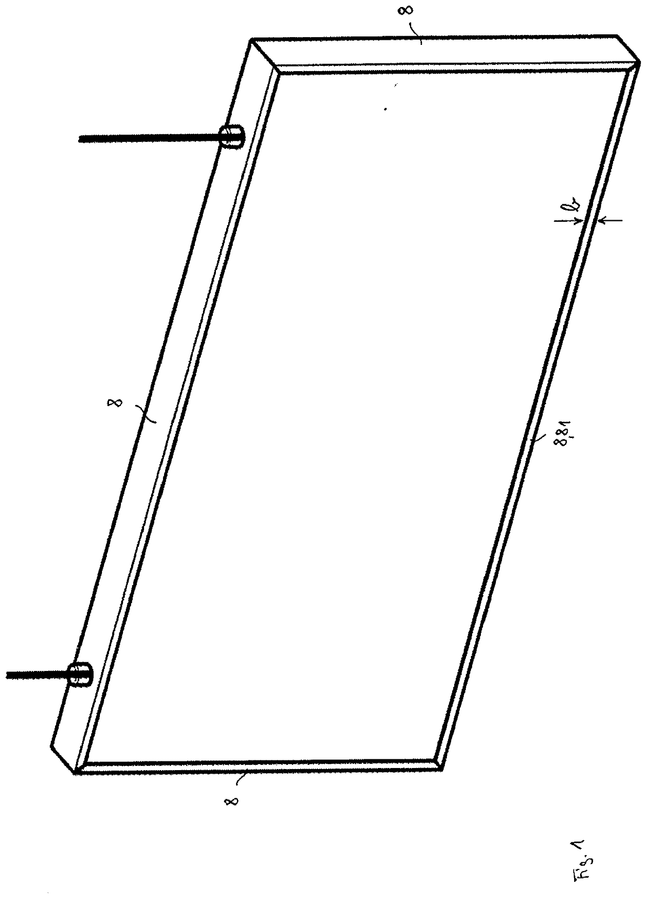

In Fig. 1 ist eine Skizze zu einem Ausführungsbeispiel einer erfindungsgemäßen Leuchte skizziert. Bei der Leuchte kann es sich insbesondere um eine Hinweisleuchte handeln, beispielsweise um eine Rettungszeichenleuchte. Bei der Leuchte kann es sich, wie in Fig. 1 angedeutet, um eine Pendelleuchte handeln.

Die Leuchte weist ein beispielsweise aus Aluminium bestehendes Rahmenelement 8 auf, das vorzugsweise eine äußere Begrenzung der Leuchte bildet. Das Rahmenelement 8 erstreckt sich geschlossen ringförmig um einen Mittelpunkt der Leuchte herum.

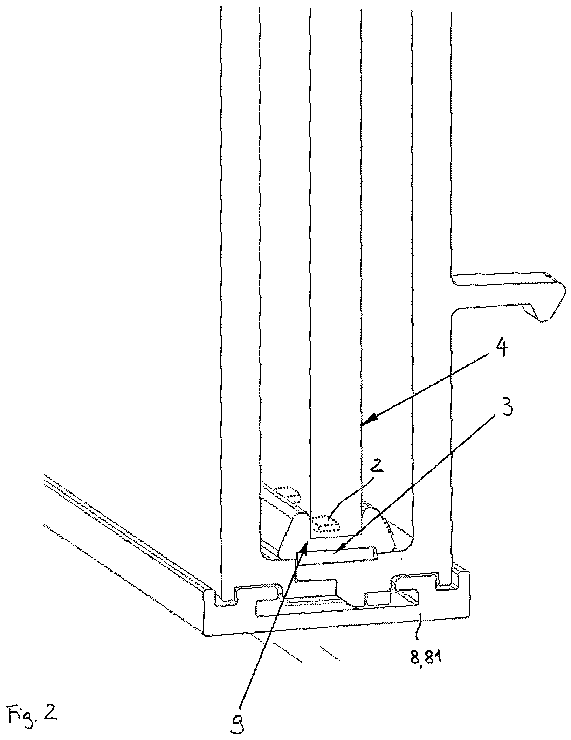

Fig. 2 zeigt eine perspektivische Schnittdarstellung um einen unteren Bereich der Leuchte. Als Lichtquelle weist die Leuchte LEDs 2 zur Erzeugung eines Lichts auf, wobei die LEDs 2 vorzugsweise auf einer Leiterplatte 3 bzw. Platine angeordnet sind. Vorzugsweise ist die Leiterplatte 3 länglich und derart angeordnet, dass sie sich mit ihrer Längsachse parallel zu einem Rahmenabschnitt 81 des Rahmens 8 erstreckt. Im gezeigten Beispiel ist das Rahmenelement 8 insgesamt rechteckig, wobei der Rahmenabschnitt 81 durch einen horizontal orientierten Teil des Rahmenelements 8 gebildet ist, der die untere der vier Seiten des Rechtecks bildet. Dies ist jedoch rein exemplarisch, der Rahmenabschnitt 81 kann auch durch jede der drei anderen Seiten gegeben sein. Im Folgenden wird die Beschreibung auf den Fall beschränkt, dass der Rahmenabschnitt 81 durch die untere Seite des Rahmenelements 8 gebildet ist. Die Richtungsangaben in der vorliegenden Beschreibung sind dementsprechend gegebenenfalls umzudeuten.

Die LEDs 2 können insbesondere längs einer Geraden auf der Leiterplatte 3 angeordnet sein, die sich parallel zu der Längsachse der Leiterplatte 3 orientiert erstreckt.

Im gezeigten Beispiel sind LEDs 2 lediglich an einer der vier Seiten des Rahmenelements 8 angeordnet. An den restlichen drei Seiten sind keine Lichtquellen vorhanden.

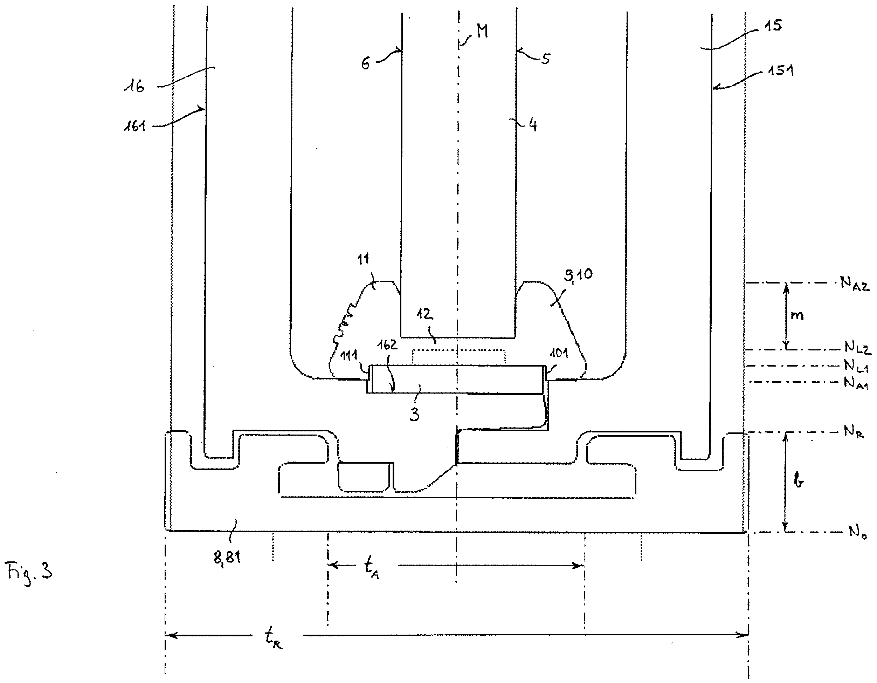

Weiterhin weist die Leuchte eine Lichtleiterplatte 4 auf. In Fig. 3 ist eine Schnittdarstellung durch einen unteren Bereich der Leuchte skizziert. Die Lichtleiterplatte 4 weist eine, in erster Näherung plane Vorderfläche 5 und eine Rückfläche 6 auf; die Rückfläche 6 kann parallel zu der Vorderfläche 5 ausgebildet sein. Weiterhin weist die Lichtleiterplatte 4 eine Seitenfläche 7 auf, die die Vorderfläche 5 mit der Rückfläche 6 verbindet. Die Seitenfläche 7 ist im Vergleich zu der Vorderfläche 5 und der Rückfläche 6 eine schmale Fläche der Lichtleiterplatte 4 und befindet sich an einem Randabschnitt der Lichtleiterplatte 4, sie ist also randseitig. Die Seitenfläche 7 weist zu dem Rahmenabschnitt 81. Im gezeigten Beispiel bildet die Seitenfläche 7 somit eine nach unten weisende Begrenzung der Lichtleiterplatte 4.

Die LEDs 2 sind derart längs der Seitenfläche 7 angeordnet, dass das Licht, das von ihnen erzeugt wird, in die Lichtleiterplatte 4 eingekoppelt wird und im Weiteren zumindest teilweise über die Vorderfläche 5 von der Lichtleiterplatte 4 wieder abgegeben wird.

Das Rahmenelement 8 ist sowohl um die Lichtleiterplatte 4, als auch um die LEDs 2 herum angeordnet. Wie aus Fig. 3 hervorgeht, erstreckt sich das Rahmenelement 8 nach unten hin - bzw. mit Bezug auf den Mittelpunkt der Leuchte nach außen hin - bis zu einem Grundniveau *N₀.*

Wie bereits erwähnt, wird hier zur erleichterten Beschreibung davon ausgegangen, dass der Rahmenabschnitt 81 durch die untere Seite des Rahmenelements 8 gegeben ist und die Seitenfläche 7 des Lichtleiterelements 4 nach unten weist; dementsprechend ist hier die Bezeichnung "Niveau" verwendet. Für den Fall, dass die LEDs 2 auf einer anderen Seite der Lichtleiterplatte 4 angeordnet sind, ist dies entsprechend umzudeuten. Das "Niveau" bezieht sich dabei auf den Mittelpunkt der Leuchte, so dass sich ein "höheres" Niveau näher am Mittelpunkt befindet als ein "niedrigeres" Niveau.

Die auf der Leiterplatte 3 angeordneten LEDs (in Fig. 3 nicht ausdrücklich gezeigt) erstrecken sich nach oben hin mit Bezug auf das Grundniveau *N₀* zwischen einem unteren LED-Niveau *N_{L1}* und einem oberen LED-Niveau *N_{L2}*. Das untere LED-Niveau *N_{L1}* kann insbesondere im Wesentlichen mit einem oberen Niveau der Leiterplatte 3 identisch sein.

Das Rahmenelement 8 bzw. der Rahmenabschnitt 81 weist eine Breite *b* auf, so dass sich der Rahmenabschnitt 81 nach oben hin bis zu einem Rahmenniveau *N_{R}* erstreckt und für die Breite *b* dementsprechend gilt: *b* = *N_{R} - N₀.* Das Rahmenniveau *N_{R}* liegt dabei zwischen dem Grundniveau *N₀* und dem oberen LED-Niveau *N_{L2},* so dass gilt: *N_{L2}* > *N_{R}.* Mit anderen Worten erstrecken sich die LEDs 2 weiter nach oben als der Rahmenabschnitt 81.

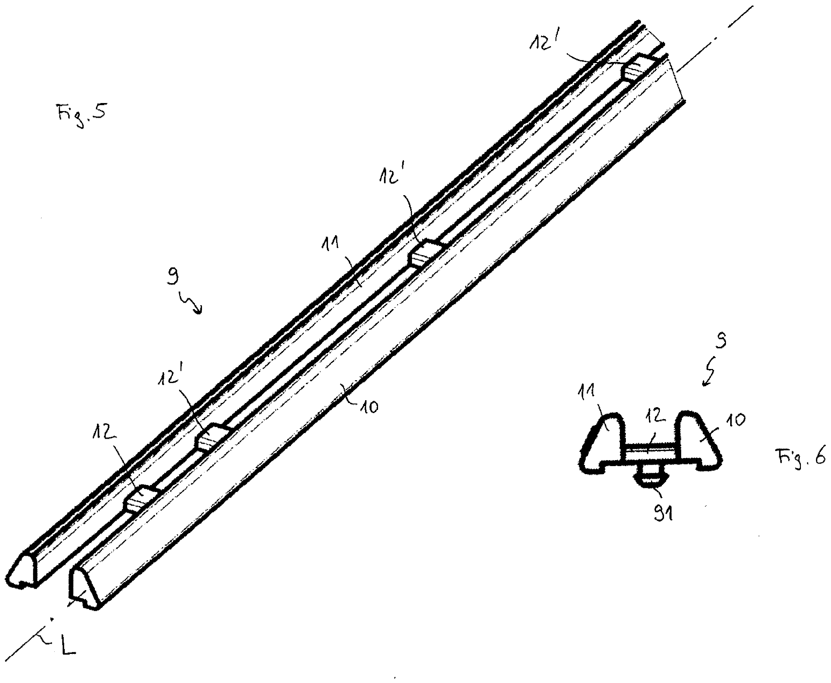

Weiterhin weist die Leuchte ein Abdeckelement 9 auf. In Fig. 5 ist ein Endbereich des Abdeckelements 9 perspektivisch skizziert. Das Abdeckelement 9 weist einen Abdeckstreifen 10 auf, der vorzugsweise länglich ist, beispielsweise profilförmig und sich längs einer Längsachse *L* erstreckt. Fig. 6 zeigt einen Querschnitt des Abdeckelements 9 normal zu der Längsachse *L*.

Wie aus Fig. 3 hervorgeht, ist die Lichtleiterplatte 4 insbesondere spiegelsymmetrisch mit Bezug auf eine Mittelebene *M* geformt. Auch das Rahmenelement 8 ist vorzugsweise spiegelsymmetrisch mit Bezug auf die Mittelebene *M* gestaltet.

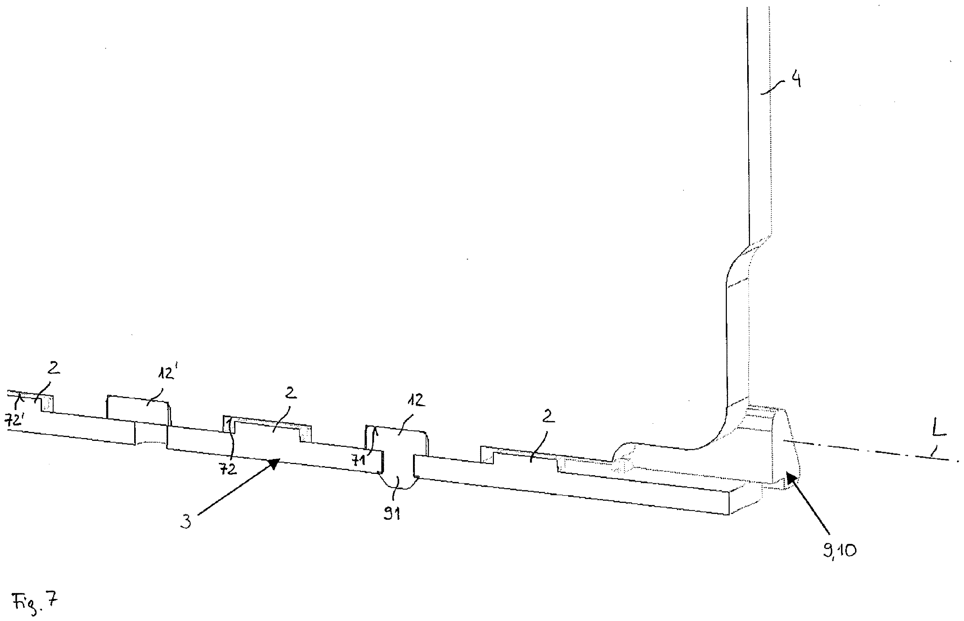

In Fig. 7 ist perspektivisch ein Schnitt durch die Mittelebene *M* skizziert. Man erkennt die Leiterplatte 3 und die auf dieser angeordneten LEDs 2, sowie die Lichtleiterplatte 4 und das Abdeckelement 9 mit dem Abdeckstreifen 10, der sich längs der Längsachse *L* erstreckt. Die Längsachse *L* ist dabei parallel zu der Mittelebene *Mund* zu der Vorderfläche 5 der Lichtleiterplatte 4 orientiert.

Wie wieder aus Fig. 3 hervorgeht, erstreckt sich der Abdeckstreifen 10 mit Bezug auf das Grundniveau *N₀* zwischen einem unteren Abdeckstreifen-Niveau *N_{A1}* und einem oberen Abdeckstreifen-Niveau *N_{A2}.* Dabei erstreckt sich der Abdeckstreifen 10 weiter nach oben, als die LEDs, so dass gilt: *N_{A2}* > *N_{L2}.* Wie im gezeigten Beispiel der Fall, erstreckt sich der Abdeckstreifen 10 vorzugsweise außerdem weiter nach unten als die LEDs 2, so dass außerdem, gilt: *N_{A}* < *N_{L1}.*

Insbesondere kann vorgesehen sein, dass sich der Abdeckstreifen 10 mit Bezug auf das Grundniveau *N₀* um ein Maß *m* über die LEDs 2 hinaus erstreckt, das größer ist als die entsprechende vertikale Erstreckung der LEDs 2 oder das Zweifache dieser Erstreckung, also dass gilt *m* = *N_{A2} - N_{L2}* > *N_{L2} - N_{L1}* oder *m = N_{A2} - N_{L2}* > *2 · (N_{L2} - N_{L1}).* Vorzugsweise gilt m > *4* · *(N_{L2} - N_{L1});* im gezeigten Beispiel beträgt *m* etwa das Fünffache der vertikalen Erstreckung der LEDs 2.

Wie weiterhin aus Fig. 3 exemplarisch hervorgeht, kann sich der Abdeckstreifen 9 um mehr als die Breite *b* des Rahmenelements 8 über das Rahmenniveau *N_{R}* hinaus erstrecken, so dass gilt *N_{A2} > 2 · b.*

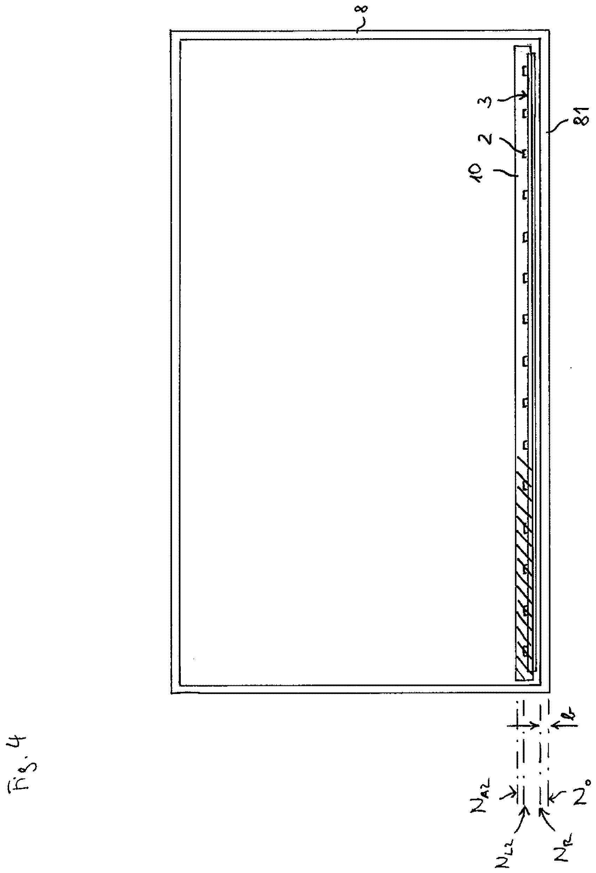

In Fig. 4 ist schematisch und nicht-maßstäblich eine Projektion normal zu der Vorderfläche 5 skizziert, wobei die Lichtleiterplatte aus Gründen der Übersichtlichkeit nicht eingezeichnet ist. Man erkennt das Rahmenelement 8 mit dem Rahmenabschnitt 81, die Leiterplatte 3 mit den darauf angeordneten LEDs 2 und den Abdeckstreifen 10, der sich bis zu dem oberen Abdeckstreifen-Niveau *N_{A2}* erstreckt und damit höher als die LEDs 2, die sich bis zu dem oberen LED-Niveau *N_{L2}* erstrecken.

Wie weiterhin aus Fig. 4 hervorgeht, ist der Abdeckstreifen 10 so angeordnet, dass er, in einer Projektion normal zu der Vorderfläche 5 betrachtet, die LEDs 2 abdeckt. Damit sei zum Ausdruck gebracht, dass die Proj ektionsfläche des Abdeckstreifens 10 - in Fig. 4 zur Verdeutlichung auf der linken Seite schraffiert - die Projektionsflächen der LEDs 2 vollständig beinhaltet bzw. einschließt.

Das Rahmenelement 8 hingegen deckt in der genannten Projektion die LEDs 2 nicht ab. Daher lässt sich das Rahmenelement 8 mit einer besonders geringen Breite *b*, also besonders schmal gestalten. Hierdurch sind die Gestaltungsmöglichkeiten der Leuchte verbessert.

Die LEDs 2 sind also durch den Abdeckstreifen 10 verdeckt, wenn man normal auf die Vorderfläche 5 blickt. Hierdurch lässt sich erzielen, dass bei entsprechender Betrachtung der Leuchte die Stellen um die LEDs 2 herum nicht aufgehellt bzw. als Lichtpunkte erscheinen.

Wie in Fig. 3 exemplarisch gezeigt, beträgt die Erstreckung des Rahmenelements 8 normal zu der Vorderfläche 5, also die Tiefe *t_{R}* des Rahmenelements 8, im gezeigten Beispiel etwa das Doppelte der entsprechenden Erstreckung des Abdeckelements 9, also der Tiefe *t_{A}* des Abdeckelements 9. Vorzugsweise gilt die Beziehung *t_{A} < 0,8 · t_{R},* besonders bevorzugt *t_{A}* < *0,5 · t_{R}.*

Vorteilhaft ist der Abdeckstreifen 10 oder das gesamte Abdeckelement 9 weiß gefärbt. Hierdurch lässt sich erzielen, dass - bei eingeschalteten LEDs 2 - die Umgebung der LEDs 2 besonders homogen erscheint.

Das Abdeckelement 9 besteht bevorzugt aus einem elastischen Material, insbesondere aus einem Elastomer, beispielsweise aus einem thermoplastischen Elastomer. Durch diese Gestaltung lässt sich das Abdeckelement 9 besonders montagefreundlich gestalten.

### ##C4, 5

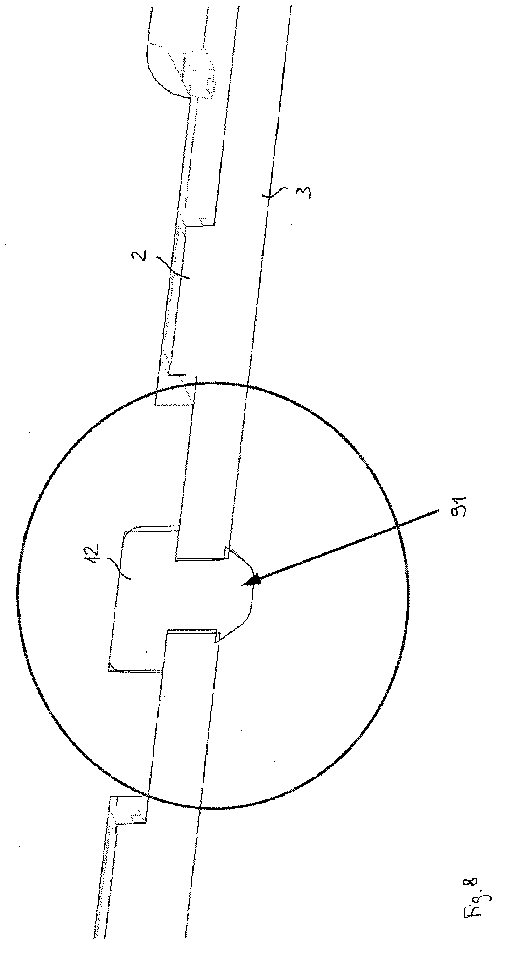

Wie beispielsweise aus den Figuren 6 und 7 hervorgeht, weist das Abdeckelement 9 für eine besonders montagefreundliche Verbindung mit der Leiterplatte 3 ein Rastelement 91, insbesondere in Pilzform bzw. Pilzkopfform auf. In Fig. 8 ist - entsprechend der Darstellung der Fig. 7 - ein Bereich um das Rastelement 91 herum vergrößert skizziert. Die Leiterplatte 3 weist zur Aufnahme des Rastelements 91 vorteilhaft eine Bohrung 31 auf, durch die hindurch sich das Rastelement 91 erstreckt, wenn das Abdeckelement 9 wie vorgesehen mit der Leiterplatte 3 verbunden ist.

Vorteilhaft weist das Abdeckelement 9 außerdem wenigstens ein analog gebildetes weiteres Rastelement auf und die Leiterplatte 3 wenigstens eine entsprechende weitere Bohrung, wodurch die Verbindung zwischen dem Abdeckelement 9 und der Leiterplatte 3 besonders stabil ermöglicht ist.

Insbesondere ist das Abdeckelement 9 so gestaltet, dass es lediglich mittels des Rastelements 91 und gegebenenfalls des wenigstens einen weiteren Rastelements an der Leiterplatte 3 gehalten sein kann.

Außerdem ist das Abdeckelement 9 vorzugsweise für eine formschlüssige Verbindung mit der Lichtleiterplatte 4 gestaltet. Auf diese Weise lässt sich montagefreundlich eine Baueinheit bilden, die aus der Leiterplatte 3 mit den LEDs 2, der Lichtleiterplatte 4 und dem, diese beiden Bauteile miteinander verbindenden Abdeckelement 4 besteht.

Vorzugsweise ist das Abdeckelement 9 symmetrisch gestaltet und zwar spiegelsymmetrisch mit Bezug auf die Mittelebene *M.* Dementsprechend weist das Abdeckelement 9 insbesondere einen weiteren Abdeckstreifen 11 auf, der vorzugsweise analog zu dem zuerst genannten Abdeckstreifen 10 gebildet ist und der sich parallel zu dem zuerst genannten Abdeckstreifen 10 erstreckt.

Die Gestaltung ist weiterhin vorteilhaft derart, dass der Abdeckstreifen 10 und der weitere Abdeckstreifen 11 zur formschlüssigen Verbindung mit der Lichtleiterplatte 4 Letztere umgreifen, insbesondere einerseits unter Kontaktierung der Vorderfläche 5 und andererseits unter Kontaktierung der Rückfläche 6.

Eine besonders einfache Gestaltung ist ermöglicht, wenn das Abdeckelement 9 weiterhin einen Verbindungssteg 12 aufweist, der den Abdeckstreifen 10 und den weiteren Abdeckstreifen 11 miteinander verbindend angeordnet ist. Dabei ist das Rastelement 91 vorzugsweise an dem Verbindungssteg 12 angeordnet.

Außerdem kann wenigstens ein weiterer Verbindungssteg 12' vorgesehen sein, so dass der Abdeckstreifen 10 und der weitere Abdeckstreifen 11 an mehreren Stellen mit Bezug auf die Längsachse *L* miteinander verbunden sind.

Durch die genannte Formschlussverbindung zwischen der Lichtleiterplatte 4 und dem Abdeckelement 9 und der weiteren Formschlussverbindung zwischen dem Abdeckelement 9 und der Leiterplatte 3 mit den LEDs 2 ist insbesondere ermöglicht, die genannte Baueinheit ohne Kleben herzustellen und zu montieren.

Wie beispielhaft aus Fig. 3 hervorgeht, kann die Leuchte außerdem ein lichtdurchlässiges, vorderes Gehäuseelement 15 und ein rückwärtiges Gehäuseelement 16 aufweisen, die vorzugsweise unmittelbar miteinander verbunden sind, beispielsweise besonders montagefreundlich über eine Rastverbindung. Das vordere Gehäuseelement 15 kann eine Vorderfläche 151 aufweisen, die eine Lichtabgabefläche der Leuchte darstellt und die insbesondere parallel zu der Vorderfläche 5 der Lichtleiterplatte 4 orientiert sein kann.

Das rückwärtige Gehäuseelement 16 kann entweder nicht lichtdurchlässig sein oder aber auch lichtdurchlässig sein, wobei im zweiten Fall durch eine rückwärtige Fläche 161 des rückwärtigen Gehäuseelements 16 eine weitere Lichtabgabefläche der Leuchte gebildet sein kann.

Im gezeigten Beispiel sind das erste Gehäuseelement 15 und das zweite Gehäuseelement 16 so geformt, dass sie im verbundenen Zustand eine Aufnahmenut 162 bilden, die kongruent zu der Leiterplatte 3 geformt ist, und zwar vorzugsweise derart, dass die Leiterplatte 3 teilweise darin Platz findet. Im gezeigten Beispiel ist die Bodenfläche der Aufnahmenut 162 lediglich durch eines der beiden Gehäuseelemente 15, 16, hier durch das rückwärtige Gehäuseelement 16 gebildet. Zur Montage kann dann die oben genannte Baueinheit "Leiterplatte 3 mit LEDs 2, Abdeckelement 9 und Lichtleiterplatte 4" relativ zu dem rückwärtigen Gehäuseelement 16 auf der Fläche, durch die im zusammengesetzten Zustand die Bodenfläche der Aufnahmenut 162 gebildet ist, positioniert werden und anschließend das vordere Gehäuseelement 15 wie vorgesehen aufgesetzt werden.

Im gezeigten Beispiel weist der Abdeckstreifen 10 an seiner Unterseite noch eine Schulterfläche 101 auf und der weitere Abdeckstreifen 11 eine hierzu analog gebildete Schulterfläche 111, die im zusammengesetzten Zustand die Leiterplatte 3 umgreifen.

Wie beispielhaft in Fig. 7 gezeigt, ist die Seitenfläche 7 der Lichtleiterplatte 3 vorzugsweise derart strukturiert geformt, dass der Verbindungssteg 12 in eine, an der Seitenfläche 7 gebildete Verbindungssteg-Ausnehmung 71 eingreift. Hierdurch lässt sich zur Montage das Abdeckelement 9 gegenüber der Lichtleiterplatte 4 besonders gut in die vorgesehene Relativposition bringen, in der der Verbindungssteg 12 die Ausnehmung 71 durchsetzend angeordnet ist.

Außerdem weist die Seitenfläche 7 vorzugsweise eine LED-Ausnehmung 72 auf, wobei sich eine der LEDs 2 in die LED-Ausnehmung 72 hinein erstreckt. Dabei kann für mehrere der LEDs 2 jeweils eine entsprechende LED-Ausnehmung 72, 72' vorgesehen sein.

## Patentansprüche

1. Leuchte, insbesondere Hinweisleuchte, aufweisend
- LEDs (2) zur Erzeugung eines Lichts,
- eine Lichtleiterplatte (4), mit einer, in erster Näherung planen Vorderfläche (5), einer Rückfläche (6) und einer, die Vorderfläche (5) mit der Rückfläche (6) verbindenden, randseitigen Seitenfläche (7),
wobei die LEDs (2) derart längs der Seitenfläche (7) angeordnet sind, dass das Licht in die Lichtleiterplatte (4) eingekoppelt wird,
wobei die Leuchte derart gestaltet ist, dass das Licht im Weiteren zumindest teilweise über die Vorderfläche (5) abgegeben wird,
- ein Rahmenelement (8), das um die Lichtleiterplatte (4) und um die LEDs (2) herum angeordnet ist und
- ein Abdeckelement (9) mit einem Abdeckstreifen (10),
wobei die Leuchte derart gestaltet ist, dass, in einer Projektion normal zu der Vorderfläche (5) betrachtet, der Abdeckstreifen (10) die LEDs (2) abdeckt und das Rahmenelement (8) die LEDs (2) nicht abdeckt,
**dadurch gekennzeichnet,**
**dass** das Abdeckelement (9) für eine formschlüssige Verbindung mit der Lichtleiterplatte (4) gestaltet ist.

2. Leuchte nach Anspruch 1,
bei der das Abdeckelement (9) aus einem elastischen Material besteht, insbesondere aus einem Elastomer, beispielsweise aus einem thermoplastischen Elastomer.

3. Leuchte nach Anspruch 1 oder 2,
bei der der Abdeckstreifen (10), vorzugsweise das Abdeckelement (9) weiß gefärbt ist.

4. Leuchte nach einem der vorhergehenden Ansprüche,
weiterhin aufweisend
- eine Leiterplatte (3), auf der die LEDs (2) angeordnet sind,
wobei das Abdeckelement (9) ein Rastelement (91), insbesondere ein pilzkopf-förmiges Rastelement für eine formschlüssige Verbindung mit der Leiterplatte (3) aufweist.

5. Leuchte nach Anspruch 4,
bei der die Leiterplatte (3) eine Bohrung (31) aufweist, durch die hindurch sich das Rastelement (91) erstreckt.

6. Leuchte nach einem der vorhergehenden Ansprüche,
bei der das Abdeckelement (9) außerdem einen weiteren Abdeckstreifen (11) aufweist, wobei das Abdeckelement (9) derart gestaltet ist, dass der Abdeckstreifen (10) und der weitere Abdeckstreifen (11) zur formschlüssigen Verbindung mit der Lichtleiterplatte (4) Letztere umgreifen.

7. Leuchte nach Anspruch 6,
bei der das Abdeckelement (9) weiterhin einen Verbindungssteg (12) aufweist, der den Abdeckstreifen (10) und den weiteren Abdeckstreifen (11) miteinander verbindend angeordnet ist.

8. Leuchte mit den in den Ansprüchen 4 und 7 genannten Merkmalen,
bei der das Rastelement (91) an dem Verbindungssteg (12) angeordnet ist.

9. Leuchte nach Anspruch 7 oder 8,
bei der die Seitenfläche (7) der Lichtleiterplatte (4) eine Verbindungssteg-Ausnehmung (71) aufweist und der Verbindungssteg (12) die Verbindungssteg-Ausnehmung (71) durchsetzend angeordnet ist.

10. Leuchte nach einem der vorhergehenden Ansprüche,
bei der die Seitenfläche (7) eine LED-Ausnehmung (72) aufweist, wobei sich eine der LEDs (2) in die LED-Ausnehmung (72) hinein erstreckt.

## Claims

1. Luminaire, in particular a sign luminaire, comprising
- LEDs (2) for generating a light,
- a light guide plate (4), with a front surface (5) in the first approximation plan, a rear surface (6) and an edge side surface (7) connecting the front surface (5) with the rear surface (6),
wherein the LEDs (2) are arranged along the side surface (7) so that the light is coupled into the light guide plate (4),
wherein the luminaire is designed so that the light is subsequently emitted at least partially via the front surface (5),
- a frame member (8) which is arranged around the light guide plate (4) and around the LEDs (2), and
- a cover element (9) with a cover strip (10),
where the luminaire is so designed that, when viewed in a projection normal to the front surface (5), the cover strip (10) covers the LEDs (2), while the frame element (8) does not cover the LEDs (2),
**characterized in that**
the cover element (9) is designed for a positive locking connection with the light guide plate (4).

2. Luminaire according to claim 1, wherein the cover element (9) consists of an elastic material, in particular of an elastomer, for example of a thermoplastic elastomer.

3. Luminaire according to claim 1 or 2, wherein the cover strip (10), preferably the cover element (9), is colored white.

4. Luminaire according to one of the preceding claims, further comprising
- a printed circuit board (3) on which the LEDs (2) are arranged,
wherein the cover element (9) has a latching element (91), in particular a mushroom-shaped latching element for a positive locking connection with the printed circuit board (3).

5. Luminaire according to claim 4, wherein the printed circuit board (3) has a bore (31) through which the latching element (91) extends.

6. Luminaire according to one of the preceding claims, wherein the cover element (9) also has a further cover strip (11), wherein the cover element (9) is so designed that the cover strip (10) and the further cover strip (11) encompass the light guide plate (4) to form a positive locking connection with the latter.

7. Luminaire according to claim 6, wherein the cover element (9) further comprises a connection web (12) which is arranged to connect the cover strip (10) and the further cover strip (11) to one another.

8. Luminaire with the features mentioned in claims 4 and 7, wherein the latching element (91) is arranged on the connection web (12).

9. Luminaire according to claim 7 or 8, wherein the side surface (7) of the light guide plate (4) has a connection web recess (71), while the connection web (12) is arranged to pass through the connection web recess (71).

10. Luminaire according to one of the preceding claims, wherein the side surface (7) has an LED recess (72), wherein one of the LEDs (2) extends into the LED recess (72).

## Revendications

1. Luminaire, plus particulièrement luminaire de signalisation, comprenant
- des LED (2) pour la production d'une lumière,
- une plaque conductrice de lumière (4), avec une face avant (5) plane en première approximation, une face arrière (6) et une face latérale (7) sur le bord, reliant la face avant (5) avec la face arrière (6),
les LED (2) étant disposées le long de la face latérale (7) de façon à ce que la lumière soit introduite dans la plaque conductrice de lumière (4),
le luminaire étant conçu de façon à ce que la lumière soit émise dans la suite au moins partiellement par la face avant (5),
- un élément de cadre (8) qui est disposé autour de la plaque conductrice de lumière (4) et autour des LED (2) et
- un élément de recouvrement (9) avec une bande de recouvrement (10),
le luminaire étant conçu de façon à ce que, dans une projection normale par rapport à la face avant (5), la bande de recouvrement (10) recouvre les LED (2) et l'élément de cadre (8) ne recouvre pas les LED (2),
**caractérisé en ce que**
l'élément de recouvrement (9) est conçu pour une liaison par complémentarité de forme avec la plaque conductrice de lumière (4).

2. Luminaire selon la revendication 1,
dans lequel l'élément de recouvrement (9) est constitué d'un matériau élastique, plus particulièrement d'un élastomère, par exemple d'un élastomère thermoplastique.

3. Luminaire selon la revendication 1 ou 2,
dans lequel la bande de recouvrement (10), de préférence l'élément de recouvrement (9), est de couleur blanche.

4. Luminaire selon l'une des revendications précédentes,
comprenant en outre
- une plaque de circuit imprimé (3), sur laquelle sont disposées les LED (2),
l'élément de recouvrement (9) comprenant un élément d'encliquetage (91), plus particulièrement un élément d'encliquetage en forme de champignon pour la liaison par complémentarité de forme avec la plaque de circuit imprimé (3).

5. Luminaire selon la revendication 4,
dans lequel la plaque de circuit imprimé (3) présente un alésage (31) à travers lequel s'étend un élément d'encliquetage (91).

6. Luminaire selon l'une des revendications précédentes,
dans lequel l'élément de recouvrement (9) comprend en outre une bande de recouvrement supplémentaire (11), l'élément de recouvrement (9) étant conçu de façon à ce que la bande de recouvrement (10) et la bande de recouvrement supplémentaire (11) enserrent la plaque conductrice de lumière (4) pour une liaison par complémentarité de forme avec cette dernière.

7. Luminaire selon la revendication 6,
dans lequel l'élément de recouvrement (9) comprend en outre une nervure de liaison (12), qui est disposée de façon à relier entre elles la bande de recouvrement (10) et la bande de recouvrement supplémentaire (11).

8. Luminaire avec les caractéristiques mentionnées aux revendications 4 et 7,
dans lequel l'élément d'encliquetage (91) est disposé sur la nervure de liaison (12).

9. Luminaire selon la revendication 7 ou 8,
dans lequel la face latérale (7) de la plaque conductrice de lumière (4) comprend un évidement pour nervure de liaison (71) et la nervure de liaison (12) est disposée de façon à traverser l'évidement pour nervure de liaison (71).

10. Luminaire selon l'une des revendications précédentes,
dans lequel la face latérale (7) comprend un évidement pour LED (72), une des LED (2) s'étendant dans l'évidement pour LED (72).
